# EUROPEAN PATENT APPLICATION

(11) **EP 4 546 529 A1**
(43) Date of publication of application: **30.04.2025**
(21) Application number: 23830510.6
(22) Date of filing: 30.06.2023
(51) Int. Cl.: H01M 50/244, H01M 50/289, H01M 50/251

(54) **ENERGY STORAGE DEVICE, AND CONTROL SYSTEM FOR ENERGY STORAGE DEVICE**

(30) Priority: 01.07.2022 CN 202221706773 U
(71) Applicant: BYD Company Limited, Shenzhen, Guangdong 518118 (CN)
(72) Inventor: ZHOU, Lei, Shenzhen, Guangdong 518118 (CN); HUANG, Zhizhi, Shenzhen, Guangdong 518118 (CN); HU, Mengjun, Shenzhen, Guangdong 518118 (CN); CAI, Qing, Shenzhen, Guangdong 518118 (CN); KONG, Yongbing, Shenzhen, Guangdong 518118 (CN)
(74) Representative: Taor, Simon Edward William
(86) International application number: PCT/CN2023/104774
(87) International publication number: WO 2024/002347

(57) **Abstract**

An energy storage device (100) and a control system (200) for an energy storage device. The energy storage device (100) comprises a case (10), a battery module (20), and at least one connecting piece (30). An accommodating cavity (11) is defined in the case (10); at least one opening (12) is formed on a side surface of the box body (10); the battery module (20) is arranged in the accommodating cavity (11); and the connecting piece (30) is connected between the side surface of the battery module (20), that is, adjacent to the opening (12) and the box body (10).

## Description

### CROSS-REFERENCE TO RELATED APPLICATIONS

The present disclosure claims priority to Chinese Patent Application No. 202221706773.8, filed by BYD Company Limited on July 1, 2022 and entitled "ENERGY STORAGE DEVICE, AND CONTROL SYSTEM FOR ENERGY STORAGE DEVICE".

### FIELD

The present disclosure relates to the field of battery technologies, and specifically, to an energy storage device and a control system for an energy storage device.

### BACKGROUND

In the related art, for a battery module and a box body, generally a limiting hole is provided on the box body, and a corresponding screw hole is mounted on a housing of the battery module, so that the box body and the battery module are fixed through a fastener. However, during transportation, when the battery module is distorted or damaged due to collision or intensive displacement, the box body is likely to be damaged together. As a result, during maintenance and replacement, the entire box body usually needs to be replaced, which is likely to cause unnecessary waste. In addition, considering that an energy storage device has heavy weight, it is relatively cumbersome and difficult to replace a connector or the fastener.

### SUMMARY

The present disclosure is intended to resolve at least one of technical problems existing in the related art. Therefore, an objective of the present disclosure is to provide an energy storage device, to facilitate mounting of a battery module and a box body and reduce production and manufacturing costs.

The energy storage device according to an embodiment of the present disclosure includes: a box body, a battery module, and at least one connecting piece. An accommodating cavity is defined in the box body, and at least one opening is formed on a side surface of the box body. The battery module is arranged in the accommodating cavity, and the connecting piece is connected between a side surface of the battery module adjacent to the opening and the box body.

According to the energy storage device of the present disclosure, the connecting piece is connected between the side surface of the battery module adjacent to the opening and the box body, which facilitates fixing of the battery module and the box body, and improves stability of the battery module. A structure of the connecting piece is simple, which can reduce the use of consumables and reduce production costs of the connecting piece. In addition, because the connecting piece is connected to a side surface of the box body, and the side surface is a non-load bearing surface of the box body and the battery module, the connecting piece does not need to share a weight of the energy storage device, which is conducive to deformation and replacement of the connecting piece, increases convenience of connection of the connecting piece and safety during replacement of the connecting piece, and can effectively avoid a case that the connecting piece is arranged at the top and the bottom of the battery module in the related art, which is not conducive to replacement and inspection of the use of the connecting piece.

In some examples, the box body includes a first direction, a second direction, and a third direction. The first direction, the second direction, and the third direction are orthogonal to each other; and the connecting piece includes a first side and a second side in the first direction of the box body, the first side is connected to a side surface of the battery module adjacent to the opening, and the second side is connected to the box body.

In some examples, a length of the first side in the second direction of the box body is greater than a length of the second side in the second direction of the box body.

In some examples, multiple first connecting holes are formed on the first side, and the multiple first connecting holes are spaced apart in the second direction of the box body. The energy storage device further includes: multiple first threaded fasteners, where the multiple first threaded fasteners respectively pass through the multiple first connecting holes to connect the connecting piece to the battery module.

In some examples, the multiple first connecting holes are respectively located at two ends of the first side in the second direction of the box body.

In some examples, multiple second connecting holes are formed on the second side, and the multiple second connecting holes are spaced apart in the second direction of the box body.

In some examples, multiple connecting structures are arranged on an inner wall of the box body, and the multiple connecting structures are spaced apart in the second direction of the box body. The energy storage device further includes: multiple second threaded fasteners, where the multiple second threaded fasteners respectively pass through the multiple second connecting holes and are in threaded connection with the multiple connecting structures.

In some examples, a length of the connecting structure is equal to a length of the battery module.

In some examples, the opening is formed on two side surfaces of the box body in the third direction respectively, the multiple connecting pieces are provided, the multiple connecting pieces are respectively connected between two ends of the battery module and the box body, and two ends of each of the connecting structures in the third direction are respectively in threaded connection with the multiple connecting pieces located at two ends of the battery module.

In some examples, a through hole is formed in each of the connecting structures, the through hole extends in the third direction of the box body, the through hole includes internal threads on at least inner surfaces of two ends, the second threaded fastener fits the internal threads, and the through hole is open on a side facing the battery module.

In some examples, the multiple connecting pieces are arranged at each of the two ends of the battery module, and the multiple connecting pieces are spaced apart in the first direction of the box body.

In some examples, the multiple second connecting holes are respectively located at two ends of the second side in the second direction of the box body.

In some examples, multiple first connecting holes are formed on the first side, and multiple second connecting holes are formed on the second side. The multiple first connecting holes include a first sub-connecting hole and a second sub-connecting hole. The first sub-connecting hole and the second sub-connecting hole are respectively located at two ends of the first side in the second direction of the box body. The multiple second connecting holes include a third sub-connecting hole and a fourth sub-connecting hole. The third sub-connecting hole and the fourth sub-connecting hole are respectively located at two ends of the second side in the second direction of the box body, the third sub-connecting hole and the first sub-connecting hole are located at one end of the connecting piece in the third direction, and the fourth sub-connecting hole and the second sub-connecting hole are located at an other end of the connecting piece in the third direction. A distance between the third sub-connecting hole and the first sub-connecting hole is greater than a distance between the fourth sub-connecting hole and the second sub-connecting hole.

In some examples, the first sub-connecting hole and the third sub-connecting hole are located above the second sub-connecting hole and the fourth sub-connecting hole.

In some examples, multiple first connecting holes are formed on the first side, and multiple second connecting holes are formed on the second side. The multiple first connecting holes include a first sub-connecting hole and a second sub-connecting hole. The first sub-connecting hole and the second sub-connecting hole are respectively located at two ends of the first side in the second direction of the box body. The multiple second connecting holes include a third sub-connecting hole and a fourth sub-connecting hole. The third sub-connecting hole and the fourth sub-connecting hole are respectively located at two ends of the second side in the second direction of the box body, the third sub-connecting hole and the first sub-connecting hole are located at one end of the connecting piece in the second direction, and the fourth sub-connecting hole and the second sub-connecting hole are located at an other end of the connecting piece in the second direction. A distance between the third sub-connecting hole and the fourth sub-connecting hole is less than a distance between the first sub-connecting hole and the second sub-connecting hole.

In some examples, multiple first connecting holes are formed on the first side, and multiple second connecting holes are formed on the second side. The multiple first connecting holes include a first sub-connecting hole and a second sub-connecting hole. The first sub-connecting hole and the second sub-connecting hole are respectively located at two ends of the first side in the second direction of the box body. The multiple second connecting holes include a third sub-connecting hole and a fourth sub-connecting hole. The third sub-connecting hole and the fourth sub-connecting hole are respectively located at two ends of the second side in the second direction of the box body, the third sub-connecting hole and the first sub-connecting hole are located at one end of the connecting piece in the second direction, and the fourth sub-connecting hole and the second sub-connecting hole are located at an other end of the connecting piece in the second direction. A connecting line passing through a center of the first sub-connecting hole and a center of the third sub-connecting hole is a first connecting line, and a connecting line passing through a center of the second sub-connecting hole and a center of the fourth sub-connecting hole is a second connecting line. A distance between the first connecting line and the second connecting line gradually increases in a direction from the second side toward the first side.

In some examples, multiple anti-collision structures are arranged on an inner wall of the box body, the multiple anti-collision structures are spaced apart in a circumferential direction of the box body, and each of the anti-collision structures extends in a direction perpendicular to a side surface on which the opening is formed in the box body.

In some examples, at least one avoidance notch for avoiding the anti-collision structure is formed on the connecting piece.

In some examples, the avoidance notch is formed by a part of an edge of the connecting piece being concave in a direction away from the anti-collision structure.

A control system for an energy storage device according to an embodiment of a second aspect of the present disclosure includes: multiple energy storage devices, the multiple energy storage devices being connected in parallel, each of the energy storage devices including a battery management system, and the energy storage device being the energy storage device according to the embodiment of the first aspect; and a battery management unit, the battery management unit being communicatively connected to the battery management system in each of the multiple energy storage devices.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a schematic diagram of an energy storage device according to an embodiment of the present disclosure;
FIG. 2 is a partial three-dimensional exploded view of an energy storage device according to an embodiment of the present disclosure;
FIG. 3 is a schematic right view of an energy storage device according to an embodiment of the present disclosure;
FIG. 4 is a schematic diagram of a box body according to an embodiment of the present disclosure;
FIG. 5 is an enlarged view of a part P in FIG. 4;
FIG. 6 is a schematic diagram of a connecting piece according to an embodiment of the present disclosure;
FIG. 7 is a schematic diagram of a control system for an energy storage device according to an embodiment of the present disclosure; and
FIG. 8 is a circuit diagram of a control system for an energy storage device according to an embodiment of the present disclosure.

In the drawings:
100-Energy storage device;
10-Box body; 11-Accommodating cavity; 12-Opening; 13-Connecting structure; 131-Through hole; 14-Anti-collision structure;
20-Battery module;
30-Connecting piece; 31-First side; 311-First connecting hole; 3111-First sub-connecting hole; 3112-Second sub-connecting hole; 32-Second side; 321-Second connecting hole; 3211-Third sub-connecting hole; 3212-Fourth sub-connecting hole; 33-Avoidance notch;
40-First threaded fastener; 50-Second threaded fastener; 60-Battery management system;
200-Control system for energy storage device; 201-Battery management unit; 202-Battery information collector; 203-Energy management system; 204-Inverter;
first direction A; second direction B; and third direction C.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary and used only for explaining the present disclosure, and should not be construed as a limitation on the present disclosure.

In the description of the present disclosure, it should be understood that, a direction or position relationship indicated by terms such as "center", "above", "below", "front", "rear", "left", "right", "vertical", "horizontal", "top", "bottom", "inner", "outer" is a direction or position relationship shown based on the accompanying drawings, and is intended only conveniently describe the present disclosure and simplify the description, but is not intended to indicate or imply that a mentioned device or element needs to have a particular direction or is constructed and operated in a particular direction. Therefore, such terms cannot be understood as a limitation on the present disclosure.

It should be noted that, the terms "first" and "second" are used for descriptive purposes only and should not be construed as indicating or implying relative importance or implicitly indicating a number of technical features indicated. Therefore, a feature limited by "first" or "second" may explicitly or implicitly include one or more of the features. Further, in the description of the present disclosure, unless otherwise stated, "multiple" means two or more than two.

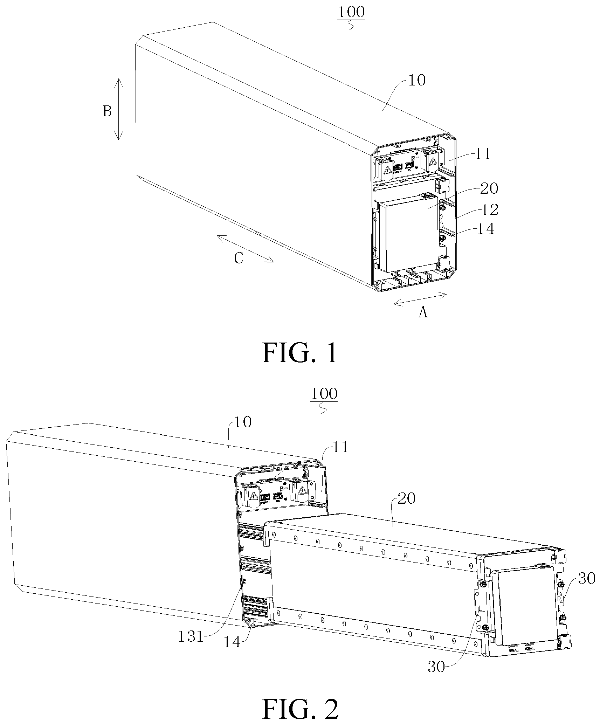

An energy storage device 100 according to an embodiment of the present disclosure is described below with reference to FIG. 1 to FIG. 8. The energy storage device 100 includes: a box body 10, a battery module 20, and at least one connecting piece 30.

Specifically, as shown in FIG. 1 to FIG. 3, an accommodating cavity 11 is defined in the box body 10, at least one opening 12 is formed on a side surface of the box body 10, and the battery module 20 may be arranged in the accommodating cavity 11 through the opening 12. The connecting piece 30 is connected between a side surface of the battery module 20 adjacent to the opening 12 and the box body 10. In other words, the connecting piece 30 is arranged between the battery module 20 and the box body 10, one side of the connecting piece 30 is connected to an end portion of the battery module 20 in a width direction (for example, a direction indicated by an arrow A in FIG. 1), and an other side of the connecting piece 30 is connected to an inner wall of the box body 10 in the width direction (for example, the direction indicated by the arrow A in FIG. 1).

According to the energy storage device 100 of the present disclosure, the connecting piece 30 is connected between the side surface of the battery module 20 adjacent to the opening 12 and the box body 10, which facilitate fixing of the battery module 20 and the box body 10, and improves stability of the battery module 20. A structure of the connecting piece 30 is simple, which can reduce the use of consumables, and reduce production costs of the connecting piece 30. In addition, because the connecting piece 30 is connected to a side surface of the box body 10 perpendicular to the opening 12, and the side surface is a non-load bearing surface of the box body 10 and the battery module 20, the connecting piece 30 does not share a weight of the energy storage device 100, which is conducive to replacement of the connecting piece 30 after deformation, increases convenience of connection of the connecting piece 30 and safety during replacement of the connecting piece 30, and can effectively avoid a case that the connecting piece is arranged at the top and the bottom of the battery module 20 in the related art, which is not conducive to replacement and inspection of the use of the connecting piece 30.

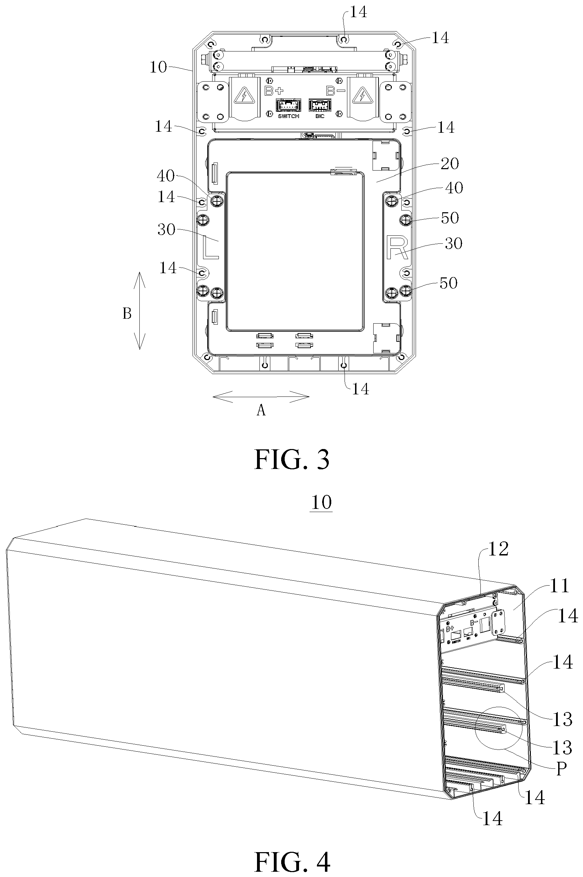

Optionally, as shown in FIG. 3, the box body 10 includes a first direction A, a second direction B, and a third direction C, and the first direction A, the second direction B, and the third direction C are orthogonal to each other. The connecting piece 30 includes a first side 31 and a second side 32 in the first direction A of the box body 10, the first side 31 is connected to the side surface of the battery module 20 adjacent to the opening 12, and the second side 32 is connected to the box body 10. Therefore, the first side 31 is connected to the side surface of the battery module 20 adjacent to the opening 12, and the second side 32 is connected to the box body 10, so that the connecting piece 30 can be prevented from being deformed by a force, protection for the connecting piece 30 can be increased, and mounting of the connecting piece 30 to the battery module 20 and the box body 10 can be facilitated.

As shown in FIG. 3, the first side 31 of the connecting piece 30 may be connected to the side surface of the battery module 20 adjacent to the opening 12 in the third direction C. Alternatively, the first side 31 of the connecting piece 30 may be connected to a surface of the battery module 20 adjacent to an inner wall side of the box body 10 in the first direction A (not shown in the figure). This is not specifically limited herein.

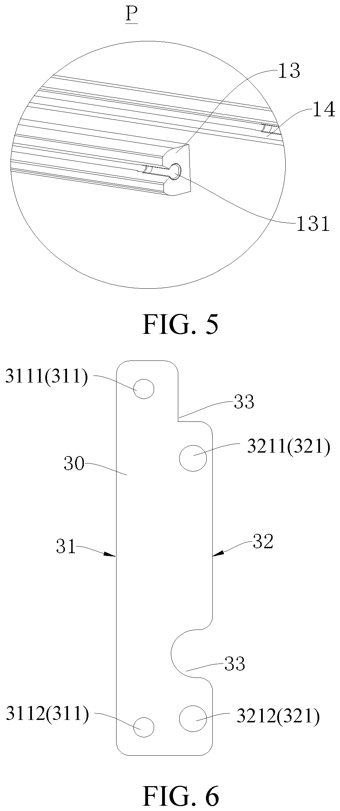

Further, with reference to FIG. 6, a length of the first side 31 in the second direction B of the box body 10 is greater than a length of the second side 32 in the second direction B of the box body 10. The length of the first side 31 and the length of the second side 32 are not specifically limited herein. During actual use, the length of the first side 31 and the length of the second side 32 may be designed based on specific positions of the box body 10 and the battery module 20 connected to the first side 31 and the second side 32, so that the connecting piece 30 can better connect the box body 10 and the battery module 20. Therefore, the length of the first side 31 is greater than the length of the second side 32, which facilitates connection between the connecting piece 30 and the side surface of the battery module 20. The structure of the connecting piece 30 is simple, and stability of the connection between the battery module 20 and the box body 10 can be improved.

In some embodiments, with reference to FIG. 6, multiple first connecting holes 311 are formed on the first side 31, and the multiple first connecting holes 311 are spaced apart in the second direction B of the box body 10. An example in which there are two first connecting holes 311 is used for description herein. The two first connecting holes 311 are arranged adjacent to two ends of the connecting piece 30 in the second direction B of the box body 10. The energy storage device 100 further includes multiple first threaded fasteners 40. The multiple first threaded fasteners 40 fit the multiple first connecting holes 311, and the multiple first threaded fasteners 40 respectively pass through the multiple first connecting holes 311 to connect the connecting piece 30 to the battery module 20. Therefore, the first connecting holes 311 are provided on the first side 31, so that the first connecting holes 311 fit the first threaded fasteners 40, to connect the connecting piece 30 to the side surface of the battery module 20. A connection manner is simple, and detachment is facilitated, which is conducive to reducing maintenance costs and has high mounting efficiency.

Further, referring to FIG. 6, the multiple first connecting holes 311 are respectively located at two ends of the first side 31 in the second direction B of the box body 10. That is, in the second direction B of the box body 10, the two first connecting holes 311 are respectively located at two ends of the first side 31, so that the connecting piece 30 is connected to the battery module 20. Through this arrangement, the first side 31 can be evenly stressed, so that stability of the connection between the first side 31 and the battery module 20 is improved.

In some embodiments, as shown in FIG. 4 to FIG. 6, multiple second connecting holes 321 are formed on the second side 32, and the multiple second connecting holes 321 are spaced apart in the second direction B of the box body 10. Therefore, the multiple second connecting holes 321 are spaced apart in the second direction B, so that a connection strength between the connecting piece 30 and the box body 10 can be increased.

With reference to FIG. 3 to FIG. 5, multiple connecting structures 13 are arranged on an inner wall of the box body 10, and the connecting structures 13 may be formed by protruding from a side of the inner wall of the box body 10 toward a center of the box body 10. Alternatively, the connecting structures 13 may be directly welded on the inner wall of the box body 10, the multiple connecting structures 13 are spaced apart in the second direction B of the box body 10, and the multiple connecting structures 13 are opposite to the multiple second connecting holes 321. The energy storage device 100 further includes multiple second threaded fasteners 50. The multiple second threaded fasteners 50 are in a one-to-one correspondence with the multiple second connecting holes 321, and the second threaded fasteners 50 pass through the second connecting holes 321 to fix the connecting piece 30 to the box body 10. A threaded hole may be provided on the side surface of the box body 10 adjacent to the opening 12, and the second threaded fastener 50 passes through the threaded hole to be in threaded connection with the connecting structure 13. Therefore, arrangement of the connecting structure 13 may increase a structural strength of the box body 10. The connecting structure 13 is connected to the second connecting hole 321 by the second threaded fastener 50, to fixedly connect the second side 32 of the connecting piece 30 to the box body 10. The connecting structure 13 arranged on the box body 10 facilitates fitting with the second threaded fastener 50, and facilitates increasing the abutment on the connecting piece 30 in the third direction C of the box body 10, thereby increasing reliability of the connection between the connecting piece 30 and the box body 10.

In some embodiments, with reference to FIG. 1 and FIG. 4, each of the connecting structures 13 extends in the third direction C of the box body 10. Therefore, the connecting structure 13 extends in the third direction C of the box body 10, which can increase the support of the connecting structure 13 to the box body 10, and improve the structural strength of the box body 10, so that the battery module 20 in the box body 10 can be effectively protected when the energy storage device 100 is subjected to an external impact, and the battery module 20 is prevented from being deformed and broken due to extrusion, thereby increasing a service life of the battery module 20.

In some specific embodiments of the present disclosure, in the third direction C of the box body, a length of the connecting structure 13 may be equal to a length of the battery module 20. Therefore, the length of the connecting structure 13 is arranged to be equal to the length of the battery module 20, so that the connecting piece 30 can be connected to the box body 10 at an end portion of the battery module 20, thereby improving assembly efficiency.

Optionally, as shown in FIG. 3 and FIG. 4, an opening 12 is formed on two side surfaces of the box body 10 in the third direction C respectively, and multiple connecting pieces 30 are provided. The multiple connecting pieces 30 are respectively connected between two ends of the battery module 20 and the box body 10. Two ends of each of the connecting structures 13 in the third direction C are respectively in threaded connection with the multiple connecting pieces 30 located at the two ends of the battery module 20. For example, in the third direction C of the box body 10, two connecting pieces 30 are respectively arranged at two ends of the battery module 20, the two connecting pieces 30 are spaced apart in the first direction A of the box body 10, and the two connecting pieces 30 are respectively connected to two inner walls of the battery module 20 and the box body 10 that are opposite to each other in the first direction A. End surfaces of the two ends of the connecting structure 13 may be flush with the side surface of the battery module 20. Alternatively, an end surface of the connecting structure 13 is lower than an end surface of the box body 10 in the third direction C, the connecting structure 13 is opposite to the connecting piece 30, and the second threaded fastener 50 may pass through the connecting structure 13 and the second side 32 of the connecting piece 30 to implement connection between the box body 10 and the connecting piece 30. Therefore, the connecting piece 30 is in threaded connection with the connecting structure 13, so that the connection manner is simple, and use of materials can be effectively reduced. A connection position between the box body 10 and the battery module 20 can be increased by using the multiple connecting pieces 30, and stress on a single connecting piece 30 can be reduced, so that reliability of the connection between the box body 10 and the battery module 20 is higher.

Specifically, with reference to FIG. 4 and FIG. 5, a through hole 131 is formed in each of the connecting structures 13. The through hole 131 extends in the third direction C of the box body 10, that is, the through hole 131 may run through the connecting structure 13 in the third direction C of the box body 10. The through hole 131 includes internal threads on at least inner surfaces of two ends, and the second threaded fastener 50 fits the internal threads, so that the box body 10 is fixedly connected to the battery module 20 by the connecting piece 30. A side of the through hole 131 facing the battery module 20 may be open. For example, a cross section of the connecting structure 13 may be in a shape of a C-shape, which satisfies the fitting between the through hole 131 and the second threaded fastener 50, and reduces the use of materials of the connecting structure 13, thereby reducing a weight of the energy storage device 100. Certainly, an open side may not be arranged on the side of the through hole 131 facing the battery module 20. Therefore, internal threads are arranged in the through hole 131, so that the second threaded fastener fits the internal threads to implement connection between the connecting piece 30 and the box body 10, thereby improving a mounting speed of the connecting piece 30 and the box body 10, and improving reliability of the connection.

In some embodiments, as shown in FIG. 3, multiple connecting pieces 30 are arranged at each of the two ends of the battery module 20, and the multiple connecting pieces 30 are spaced apart in the first direction A of the box body 10. For example, an example in which two connecting pieces 30 are arranged at one end of the battery module 20 is used for description herein, and the two connecting pieces 30 are distributed in the first direction A of the box body 10. Therefore, the multiple connecting pieces 30 are arranged at each end of the battery module 20, which can increase stability of the connection between the battery module 20 and the box body 10, and improve integrity of the connection between the battery module 20 and the box body 10. Compared with that the multiple connecting pieces 30 are arranged at two ends of the box body 10 in the second direction B, the connecting pieces 30 are spaced apart in the first direction A of the box body 10, which can reduce stress and increase a service life of the connecting piece 30.

In some embodiments, referring to FIG. 3, the multiple second connecting holes 321 are respectively located at two ends of the second side 32 in the second direction B of the box body 10. Therefore, the multiple second connecting holes 321 are provided at two ends of the second side 32 in the second direction B of the box body 10, which can facilitate stress distribution on an entire second side 32, and improve reliability of the connection between the connecting piece 30 and the box body 10.

Optionally, as shown in FIG. 3 and FIG. 6, multiple first connecting holes 311 are formed on the first side 31, and multiple second connecting holes 321 are formed on the second side 32. The multiple first connecting holes 311 include a first sub-connecting hole 3111 and a second sub-connecting hole 3112. The first sub-connecting hole 3111 and the second sub-connecting hole 3112 are respectively located at two ends of the first side 31 in the second direction B of the box body 10. The multiple second connecting holes 321 include a third sub-connecting hole 3211 and a fourth sub-connecting hole 3212. The third sub-connecting hole 3211 and the fourth sub-connecting hole 3212 are respectively located at two ends of the second side 32 in the second direction B of the box body 10. The third sub-connecting hole 3211 and the first sub-connecting hole 3111 are located at one end of the connecting piece 30 in the second direction B of the box body 10, and the fourth sub-connecting hole 3212 and the second sub-connecting hole 3112 are located at an other end of the connecting piece 30 in the second direction B of the box body 10. A distance between the third sub-connecting hole 3211 and the first sub-connecting hole 3111 is greater than a distance between the fourth sub-connecting hole 3212 and the second sub-connecting hole 3112. The first sub-connecting hole 3111 and the third sub-connecting hole 3211 are located above the second sub-connecting hole 3112 and the fourth sub-connecting hole 3212.

It may be understood that, the first side 31 of the connecting piece 30 is connected to the side surface of the battery module 20, and the second side 32 of the connecting piece 30 is connected to the box body 10. When the energy storage device 100 is subjected to an external force, the box body 10 and the battery module 20 arranged inside may vibrate. There is force transmission between the first side 31 and the second side 32 of the connecting piece 30 through the threaded fastener. When a torque subjected to is constant, a larger spacing between the first sub-connecting hole 3111 and the third sub-connecting hole 3211 and a larger spacing between the second sub-connecting hole 3112 and the fourth sub-connecting hole 3212 on the connecting piece 30 indicates a smaller force to be transmitted between the box body 10 and the battery module 20, and indicates higher stability of the connection. Due to limitation of a mounting position of the connecting piece 30 on the battery module 20, the spacing between the first sub-connecting hole 3111 and the third sub-connecting hole 3211 is greater than the spacing between the second sub-connecting hole 3112 and the fourth sub-connecting hole 3212, so as to increase space utilization of the side surface of the battery module 20. In addition, the distance between the third sub-connecting hole 3211 and the first sub-connecting hole 3111 is greater than the distance between the fourth sub-connecting hole 3212 and the second sub-connecting hole 3112, so that the space on the connecting piece 30 can be fully used, and the connecting piece 30 is connected to the box body 10 and the battery module 20 to improve mounting stability of the battery module 20, the stress on the connecting piece 30 is reduced, the force transmitted between the box body 10 and the battery module 20 is reduced, the service life of the connecting piece 30 is increased, the connecting piece 30 is prevented from being twisting and deforming due to the force, and the mounting stability of the battery module 20 is improved. During actual application, in a box body that the space at which the battery module 20 is connected to the box body 10 is sufficient, the distance between the first sub-connecting hole 3111 and the third sub-connecting hole 3211 may be equal to the distance between the second sub-connecting hole 3112 and the fourth sub-connecting hole 3212.

Further, with reference to FIG. 6, a distance between the third sub-connecting hole 3211 and the fourth sub-connecting hole 3212 is less than a distance between the first sub-connecting hole 3111 and the second sub-connecting hole 3112. This is mainly because the battery module 20 has a large weight. When the energy storage device 100 is subjected to a force, the force is often transmitted from the battery module 20 to the box body 10. To have higher stability of the battery module 20 relative to the box body 10, the distance between the third sub-connecting hole 3211 and the fourth sub-connecting hole 3212 is less than the distance between the first sub-connecting hole 3111 and the second sub-connecting hole 3112, to reduce the force transmitted between the battery module 20 and the box body 10 through the connecting piece 30, thereby improving protection for the battery module 20.

For example, a connecting line passing through a center of the first sub-connecting hole 3111 and a center of the third sub-connecting hole 3211 is a first connecting line, and a connecting line passing through a center of the second sub-connecting hole 3112 and a center of the fourth sub-connecting hole 3212 is a second connecting line. A distance between the first connecting line and the second connecting line gradually increases in a direction from the second side 32 toward the first side 31. Therefore, the first sub-connecting hole 3111, the second sub-connecting hole 3112, the third sub-connecting hole 3211, and the fourth sub-connecting hole 3212 are respectively fitted by the threaded fastener, and the distance between the first connecting line and the second connecting line gradually increases, so that the first connecting line and the second connecting line are fixed approximately in a shape of triangle, which can increase stability of connecting the battery module 20 to the box body 10 by using the connecting piece 30.

In some embodiments, referring to FIG. 4, multiple anti-collision structures 14 are arranged on the inner wall of the box body 10. The multiple anti-collision structures 14 are spaced apart in a circumferential direction of the box body 10, and each of the anti-collision structures 14 extends in a direction perpendicular to the side surface on which the opening 12 is formed in the box body 10, that is, each of the anti-collision structures 14 extends in the third direction C of the box body 10. The connecting structure 13 may be a part of the anti-collision structure 14, and a length of the anti-collision structure 14 in the third direction C of the box body 10 may be equal to a length of the box body 10. A mounting hole may be provided on an end portion of the anti-collision structure 14 in the third direction C of the box body 10. A protective cover (not shown in the figure) may be provided at the opening 12 of the box body 10. The protective cover is provided with a hole opposite to the mounting hole. The threaded fastener connects the mounting hole and the hole on the protective cover to mount the protective cover on the box body 10, thereby closing the accommodating cavity 11, increasing sealing performance of the energy storage device 100, and enabling the energy storage device 100 to have a good waterproof and dustproof effect. Therefore, the multiple anti-collision structures 14 are spaced apart on an inner wall of the accommodating cavity 11, and the structural strength of the box body 10 can be increased, so that the box body 10 has a good ability to resist deformation, and protection for the battery module 20 inside the box body 10 is increased.

With reference to FIG. 6, at least one avoidance notch 33 for avoiding the anti-collision structure 14 is formed on the connecting piece 30. For example, there may be two avoidance notches 33, and the two avoidance notches 33 may be opposite to the anti-collision structure 14. One of the two avoidance notches 33 is arranged at an end of the third sub-connecting hole 3211 away from the fourth sub-connecting hole 3212 in the second direction B of the box body 10, and the other of the two avoidance notches 33 is arranged between the third sub-connecting hole 3211 and the fourth sub-connecting hole 3212 on the second side 32 and is designed adjacent to the fourth sub-connecting hole 3212. When the connecting piece 30 is arranged between the end portion of the battery module 20 and the side surface of the box body 10, the avoidance notch 33 may fit the anti-collision structure 14, and the connecting holes arranged on the first side 31 and the second side 32 may be opposite to the connecting structure 13. Therefore, the avoidance notch 33 is arranged on the connecting piece 30, so that when the connecting piece 30 connects the battery module 20 and the box body 10, the anti-collision structure 14 is prevented from interfering with the mounting of the connecting piece 30, thereby increasing utilization of the space on the side surface of the battery module 20 adjacent to a side of the opening 12, and improving structural compactness of the energy storage device 100.

Optionally, the avoidance notch 33 is formed by a part of an edge of the connecting piece 30 being concave in a direction away from the anti-collision structure 14. That is, in a direction from the second side 32 of the connecting piece 30 to the first side 31, an edge of the second side 32 is recessed to form the avoidance notch 33. Therefore, the avoidance notch 33 formed on the connecting piece 30 can avoid the anti-collision structure 14 arranged on the side surface of the box body 10, so as to implement a light and thin design of the energy storage device 100 in the third direction C of the box body 10.

In some embodiments, in a circumferential direction of the connecting piece 30, corners of the connecting piece 30 have a smooth transition. Therefore, the connecting piece 30 has a smooth transition at the corners, which can reduce resistance received by the connecting piece 30 when the battery module 20 and the box body 10 move relative to each other in the first direction A of the box body 10.

In some embodiments, the connecting piece 30 is an aluminum alloy member. The aluminum alloy member has good structural strength and is light in weight, which can effectively reduce a weight of the energy storage device 100, and increase the stability of the connection between the box body 10 and the battery module 20.

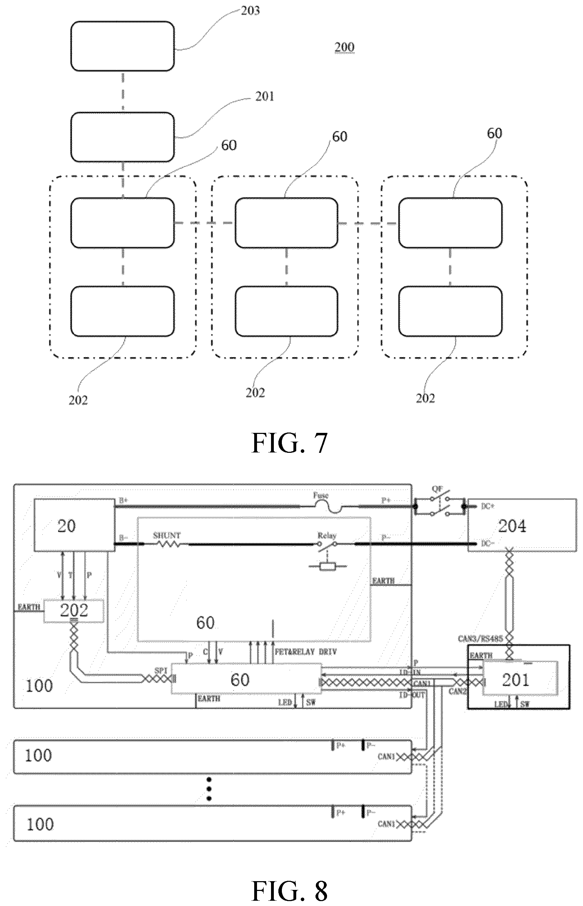

As shown in FIG. 7 and FIG. 8, a control system 200 for an energy storage device according to an embodiment of a second aspect of the present disclosure includes a battery management unit (BMU) 201 and multiple energy storage devices 100. The multiple energy storage devices 100 are connected in parallel, and each of the energy storage devices 100 includes a battery management system (Battery Management System, BMS) 60. The battery management system 60 is arranged in the box body 10 and located above the battery module 20, and may receive information such as a voltage and a temperature of a battery core inside the battery module 20 and control the battery core by analyzing the received information, to ensure a normal operation of the battery core.

The battery management unit (BMU) 201 may be communicatively connected to the battery management system (BMS) 60 of each energy storage device 100 in the multiple energy storage devices 100, for example, communicatively connected through a controller area network (CAN) bus.

The battery management unit (BMU) 201 in the present disclosure may be independently formed as a module, and may monitor states of all the battery management systems (BMS) 60 in the energy storage devices 100 connected in parallel, perform distributed control management on the battery management systems 60 through communication (that is, perform independent control management on the battery management systems 60), and balance the state of charge (SOC). Regardless of how many energy storage devices 100 are connected in parallel, only one total battery management unit (BMU) 201 may be used to control all the energy storage devices 100 connected in parallel, and costs are reduced.

Further, referring to FIG. 7 and FIG. 8, each energy storage device 100 further includes a battery information collector (Battery Information Collector, BIC) 202. The battery information collector (BIC) 202 is communicatively connected to the battery management system 60, for example, communicatively connected through a CAN bus. The BIC is mainly configured to collect battery data and transmit the battery data to the battery management system (BMS) 60. When an abnormality occurs in the battery data, the BMS may control a circuit breaker (not shown in the figure) of a main circuit of a corresponding battery to be disconnected. When an entire system fails, the BMS receives a control instruction of the BMU, and performs a corresponding control action on the control instruction of the BMU, for example, controls relays of main circuits of all batteries to be disconnected.

Further, as shown in FIG. 7 and FIG. 8, the control system 200 for an energy storage device further includes an energy management system (Energy Management System, EMS) 203 or an inverter 204. The energy management system 203 or the inverter 204 is communicatively connected to the battery management unit 201, for example, communicatively connected through a CAN bus. The battery management unit 201 may transmit a basic status and the like of a battery to the EMS/inverter 204, and receive a charging and discharging instruction from the EMS/inverter 204, to perform independent charging and discharging control on each BMS.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, schematic descriptions of the foregoing terms do not necessarily refer to the same embodiment or example. In addition, the described specific feature, structure, material, or characteristic may be combined in a proper manner in any one or more embodiments or examples.

Although the embodiments of the present disclosure have been shown and described, a person of ordinary skill in the art may understand that: various changes, modifications, replacements and variations may be made to the embodiments without departing from the principles and spirit of the present disclosure, and the scope of the present disclosure is as defined by the appended claims and their equivalents.

## Claims

1. An energy storage device (100), comprising:
a box body (10), an accommodating cavity (11) being defined in the box body (10), and at least one opening (12) being formed on a side surface of the box body (10);
a battery module (20), the battery module (20) being arranged in the accommodating cavity (11); and
at least one connecting piece (30), the connecting piece (30) being connected between a side surface of the battery module (20) adjacent to the opening (12) and the box body (10), to fix the battery module (20) and the box body (10).

2. The energy storage device (100) according to claim 1, wherein the box body (10) comprises a first direction (A), a second direction (B), and a third direction (C), the first direction (A), the second direction (B), and the third direction (C) being orthogonal to each other; and
the connecting piece (30) comprises a first side (31) and a second side (32) in the first direction (A) of the box body (10), the first side (31) being connected to the side surface of the battery module (20) adjacent to the opening (12), and the second side (32) being connected to the box body (10).

3. The energy storage device (100) according to claim 2, wherein a length of the first side (31) in the second direction (B) of the box body (10) is greater than a length of the second side (32) in the second direction (B) of the box body (10).

4. The energy storage device (100) according to claim 2 or 3, wherein a plurality of first connecting holes (311) are formed on the first side (31), and the plurality of first connecting holes (311) are spaced apart in the second direction (B) of the box body (10); and
the energy storage device (100) further comprises:
a plurality of first threaded fasteners (40), the plurality of first threaded fasteners (40) respectively passing through the plurality of first connecting holes (311) to connect the connecting piece (30) to the battery module (20).

5. The energy storage device (100) according to claim 4, wherein the plurality of first connecting holes (311) are respectively located at two ends of the first side (31) in the second direction (B) of the box body (10).

6. The energy storage device (100) according to any one of claims 2 to 5, wherein a plurality of second connecting holes (321) are formed on the second side (32), and the plurality of second connecting holes (321) are spaced apart in the second direction (B) of the box body (10).

7. The energy storage device (100) according to claim 6, wherein a plurality of connecting structures (13) are arranged on an inner wall of the box body (10), and the plurality of connecting structures (13) are spaced apart in the second direction (B) of the box body (10); and
the energy storage device (100) further comprises:
a plurality of second threaded fasteners (50), the plurality of second threaded fasteners (50) respectively passing through the plurality of second connecting holes (321) and being in threaded connection with the plurality of connecting structures (13).

8. The energy storage device (100) according to claim 7, wherein a length of the connecting structure (13) is equal to a length of the battery module (20).

9. The energy storage device (100) according to claim 7 or 8, wherein the opening (12) is formed on two side surfaces of the box body (10) in the third direction (C) respectively; and
a plurality of connecting pieces (30) are provided, the plurality of connecting pieces (30) being respectively connected between two ends of the battery module (20) and the box body (10), and two ends of each of the connecting structures (13) in the third direction (C) being respectively in threaded connection with the plurality of connecting pieces (30) located at the two ends of the battery module (20).

10. The energy storage device (100) according to claim 9, wherein a through hole (131) is formed in each of the connecting structures (13), the through hole (131) extends in the third direction (C) of the box body (10), the through hole (131) comprises internal threads on at least inner surfaces of two ends, the second threaded fastener (50) fits the internal threads, and the through hole (131) is open on a side facing the battery module (20).

11. The energy storage device (100) according to claim 9, wherein the plurality of connecting pieces (30) are arranged at each of the two ends of the battery module (20), and the plurality of connecting pieces (30) are spaced apart in the first direction (A) of the box body (10).

12. The energy storage device (100) according to any one of claims 6 to 11, wherein the plurality of second connecting holes (321) are respectively located at two ends of the second side (32) in the second direction (B) of the box body (10).

13. The energy storage device (100) according to claim 2 or 3, wherein a plurality of first connecting holes (311) are formed on the first side (31), and a plurality of second connecting holes (321) are formed on the second side (32);
the plurality of first connecting holes (311) comprise a first sub-connecting hole (3111) and a second sub-connecting hole (3112), the first sub-connecting hole (3111) and the second sub-connecting hole (3112) being respectively located at two ends of the first side (31) in the second direction (B) of the box body (10);
the plurality of second connecting holes (321) comprise a third sub-connecting hole (3211) and a fourth sub-connecting hole (3212), the third sub-connecting hole (3211) and the fourth sub-connecting hole (3212) being respectively located at two ends of the second side (32) in the second direction (B) of the box body (10), the third sub-connecting hole (3211) and the first sub-connecting hole (3111) being located at one end of the connecting piece (30) in the second direction (B), and the fourth sub-connecting hole (3212) and the second sub-connecting hole (3112) being located at an other end of the connecting piece (30) in the second direction (B); and
a distance between the third sub-connecting hole (3211) and the first sub-connecting hole (3111) is greater than a distance between the fourth sub-connecting hole (3212) and the second sub-connecting hole (3112).

14. The energy storage device (100) according to claim 13, wherein the first sub-connecting hole (3111) and the third sub-connecting hole (3211) are located above the second sub-connecting hole (3112) and the fourth sub-connecting hole (3212).

15. The energy storage device (100) according to claim 2 or 3, wherein
a plurality of first connecting holes (311) are formed on the first side (31), and a plurality of second connecting holes (321) are formed on the second side (32);
the plurality of first connecting holes (311) comprise a first sub-connecting hole (3111) and a second sub-connecting hole (3112), the first sub-connecting hole (3111) and the second sub-connecting hole (3112) being respectively located at two ends of the first side (31) in the second direction (B) of the box body (10);
the plurality of second connecting holes (321) comprise a third sub-connecting hole (3211) and a fourth sub-connecting hole (3212), the third sub-connecting hole (3211) and the fourth sub-connecting hole (3212) being respectively located at two ends of the second side (32) in the second direction (B) of the box body (10), the third sub-connecting hole (3211) and the first sub-connecting hole (3111) being located at one end of the connecting piece (30) in the second direction (B), and the fourth sub-connecting hole (3212) and the second sub-connecting hole (3112) being located at an other end of the connecting piece (30) in the second direction (B); and
a distance between the third sub-connecting hole (3211) and the fourth sub-connecting hole (3212) is less than a distance between the first sub-connecting hole (3111) and the second sub-connecting hole (3112).

16. The energy storage device (100) according to claim 2 or 3, wherein
a plurality of first connecting holes (311) are formed on the first side (31), and a plurality of second connecting holes (321) are formed on the second side (32);
the plurality of first connecting holes (311) comprise a first sub-connecting hole (3111) and a second sub-connecting hole (3112), the first sub-connecting hole (3111) and the second sub-connecting hole (3112) being respectively located at two ends of the first side (31) in the second direction (B) of the box body (10);
the plurality of second connecting holes (321) comprise a third sub-connecting hole (3211) and a fourth sub-connecting hole (3212), the third sub-connecting hole (3211) and the fourth sub-connecting hole (3212) being respectively located at two ends of the second side (32) in the second direction (B) of the box body (10), the third sub-connecting hole (3211) and the first sub-connecting hole (3111) being located at one end of the connecting piece (30) in the second direction (B), and the fourth sub-connecting hole (3212) and the second sub-connecting hole (3112) being located at an other end of the connecting piece (30) in the second direction (B); and
a connecting line passing through a center of the first sub-connecting hole (3111) and a center of the third sub-connecting hole (3211) is a first connecting line, and a connecting line passing through a center of the second sub-connecting hole (3112) and a center of the fourth sub-connecting hole (3212) is a second connecting line, wherein
a distance between the first connecting line and the second connecting line gradually increases in a direction from the second side (32) toward the first side (31).

17. The energy storage device (100) according to any one of claims 1 to 16, wherein a plurality of anti-collision structures (14) are arranged on the inner wall of the box body (10), the plurality of anti-collision structures (14) are spaced apart in a circumferential direction of the box body (10), and each of the anti-collision structures (14) extends in a direction perpendicular to the side surface on which the opening (12) is provided on the box body (10).

18. The energy storage device (100) according to claim 17, wherein at least one avoidance notch (33) for avoiding the anti-collision structure (14) is formed on the connecting piece (30).

19. The energy storage device (100) according to claim 18, wherein the avoidance notch (33) is formed by a part of an edge of the connecting piece (30) being concave in a direction away from the anti-collision structure (14).

20. A control system (200) for an energy storage device, comprising:
a plurality of energy storage devices (100), the plurality of energy storage devices (100) being connected in parallel, each of the energy storage devices (100) comprising a battery management system, and the energy storage device (100) being the energy storage device (100) according to any one of claims 1 to 19; and
a battery management unit (201), the battery management unit (201) being communicatively connected to the battery management system (60) in each of the plurality of energy storage devices (100).
